# EUROPÄISCHE PATENTSCHRIFT

(11) **EP 2 682 827 B1**
(45) Veröffentlichungstag und Bekanntmachung des Hinweises auf die Patenterteilung: **21.02.2018**
(21) Anmeldenummer: 12174585.5
(22) Anmeldetag: 02.07.2012
(51) Int. Cl.: G05B 19/042

(54) **Automatisierungssystem mit einem geteilten Eingabegerät**
Automation system with a shared input device
Système d'automatisation avec un dispositif d'entrées partagé

(43) Veröffentlichungstag der Anmeldung: 08.01.2014
(73) Patentinhaber: Siemens Aktiengesellschaft, 80333 München (DE)
(72) Erfinder: Dausend, Stefan, 91126 Schwabach (DE)

(56) Entgegenhaltungen:
- Anonym: "PROFINET Systembeschreibung", PROFIBUS Nutzerorganisation , 30. Juni 2011 (2011-06-30), Seiten 1-24, XP002688116, Gefunden im Internet: URL:http://www.profibus.com/nc/downloads/d ownloads/profinet-technology-and-applicati on-system-description/display/ [gefunden am 2012-11-27]
- MIRKO FUNKE: "PROFINET Innovations 2010", INTERNET CITATION, 31. Dezember 2010 (2010-12-31), Seiten 1-8, XP002688117, Gefunden im Internet: URL:http://www.automation.siemens.com/mcms /automation/en/industrial-communications/p rofinet/Documents/articles/_assets/innovat ion/PROFINET_Innovations_EN_F1.pdf [gefunden am 2012-11-27]

## Beschreibung

Die Erfindung betrifft ein Automatisierungssystem umfassend eine erste Steuerung und eine zweite Steuerung, welche über einen Feldbus mit einem Eingabegerät verbunden sind. Das Eingabegerät ist dabei insbesondere ausgestaltet um beispielsweise in einem Automatisierungssystem mit einem Feldbus nach dem Profinet-IO Standard zu arbeiten.

Derartige Automatisierungssysteme mit Eingabegeräten werden vorzugsweise in der Prozess- und Fertigungsautomatisierung eingesetzt um an verteilten Orten in dem zu automatisierenden Prozess Daten entgegenzunehmen und an entsprechende Steuerungen, wie z.B. Automatisierungsgeräte in der Aufbauart einer speicherprogrammierbaren Steuerung, weiterzugeben.

In verteilten Automatisierungsumgebungen werden ein Status und ein Signalabbild von Prozess-Signalen der Eingabegeräte häufig für verschiedene Steuerungen gleichzeitig benötigt.

Bisher wurde die Verteilung von dem Signalabbild der Prozess-Signale an eine erste Steuerung und an eine weitere zweite Steuerung derart gelöst, dass von der ersten Steuerung die Daten von dem Eingabegerät oder Peripheriegerät gelesen werden und danach vorzugsweise über eine separate Datenleitung an die zweite Steuerung, die diese Prozess-Signale ebenfalls zur Bewältigung ihrer spezifischen Steuerungsaufgaben benötigt, gesendet oder weitergeleitet werden. Bei dieser Vorgehensweise ist es von Nachteil, dass die Daten, nämlich die Prozess-Signale, mit einer Zeitverzögerung gegenüber dem Ankunftszeitpunkt bei der ersten Steuerung, bei der zweiten Steuerung ankommen. Auch muss diese Weiterleitung projektiert bzw. programmiert werden, welches einen höheren Aufwand darstellt. Auch Diagnoseinformationen müssten ebenfalls über diesen zusätzlichen Datenleitungsweg zu möglichen anderen Steuerungen kommuniziert werden. Eine Datenkonsistenz zwischen den unterschiedlichen Steuerungen ist somit nicht gewährleistet.

In der Profinetsystembeschreibung "Technologie und Anwendung" sind beispielsweise zwei Steuerungen an ein Eingabegerät angeschlossen man spricht in der Automatisierungstechnik, insbesondere beim Profinet-I/O, von Shared Devices. Das Eingabegerät ist also ein geteiltes Eingabegerät, welches für verschiedene Steuerungen Daten bereitstellen kann. Bei den Modellierungen nach der Profinet-Norm (IEC 61585/IEC 61784) ist vorgesehen, dass Shared Devices dadurch zusammengestellt werden, dass das Eingabegerät in Submodule unterteilt ist und diese Submodule jeweils eindeutig einem Controller, also einer Steuerung, zugeordnet sind. Eine Softwareapplikation dieses Controllers oder dieser Steuerung kann nur die zugeordneten Submodule abfragen oder steuern.

In "PROFINET Innovations 2010" von Mirko Funke, URL:http://www.automation.siemens.com/mcms/automation/en/indu strial-communications/profinet/Documents/articles/_as-sets/innovation/PROFINET_Innovations_EN_F1.pdf, 31. Dezember 2010, Seiten 1-8, XP002688117, Nürnberg, ist ebenfalls eine Anordnung mit zwei Steuerungen und einem I/O-Device offenbart.

Es ist Aufgabe der vorliegenden Erfindung bei den nach dem Stand der Technik bekannten "Shared-Devices" eine Möglichkeit für den parallelen Zugriff von zwei verschiedenen Controllern bzw. Steuerungen auf den gleichen Eingang eines I/O-Devices bzw. eines Eingabegerätes zu finden.

Gelöst wird die Aufgabe durch ein Automatisierungssystem umfassend eine erste Steuerung und eine zweite Steuerung, welche über einen Feldbus mit einen Eingabegerät verbunden sind, wobei das Eingabegerät ein Modul, welches wiederum mindestens ein erstes Submodul und ein zweites Submodul aufweist, umfasst, wobei die erste Steuerung erste Verschaltungsinformationen aufweist, welche eine Zuordnung zwischen der ersten Steuerung und dem ersten Submodul festlegt, und die zweite Steuerung zweite Verschaltungsinformationen aufweist, welche eine Zuordnung zwischen der zweiten Steuerung und dem zweiten Submodul festlegt, weiterhin ist das Modul ausgestaltet, dass es mit einer Mehrzahl von Eingängen für Prozess-Signale verbunden ist, wobei ein Signalabbild der Prozess-Signale in einen ersten Speicherbereich abgelegt ist, wobei der erste Speicherbereich dem ersten Submodul zugeordnet ist, weiterhin weist das Modul ein Kopiermittel auf, welches ausgestaltet ist das Signalabbild der Prozess-Signale von dem ersten Speicherbereich in einen zweiten Speicherbereich zu kopieren, wobei der zweite Speicherbereich dem zweiten Submodul zugeordnet ist.

Da die Hersteller beim Aufbau von Automatisierungsgeräten und Eingabegeräten die Norm nicht verletzen wollen, aber dennoch eine Möglichkeit bieten wollen, dass mehrere Steuerungen oder Controller gleichzeitig auf bestimmte Signalabbilder von Prozess-Signalen zugreifen können, wurde in das Eingabegerät mit Vorteil ein Kopiermittel und mehrere zugeordnete Speicherbereiche eingearbeitet, so dass den unterschiedlichen Steuerungen gleichzeitig die Prozess-Signale bereitgestellt werden können.

In einer vorteilhaften Ausgestaltung weist das Modul ein Betriebsarten-Schaltmittel auf, welches mit einem Mittel aufweisend eine Steuersoftware des Moduls in Verbindung steht, und die Steuersoftware ausgestaltet ist das Betriebsarten-Schaltmittel abzufragen und zwischen einer Steuerung des Moduls in einem Standardbetrieb oder in einem Kopierbetrieb zu wählen. Das Betriebsarten-Schaltmittel bietet den Vorteil, ein Eingabegerät in einem Automatisierungssystem flexibel einzusetzen.

Um die Zuordnungen zwischen den Steuerungen und den Submodulen zu vereinfachen, weist das Modul einen Parameterblock auf, in welchem ein Gerätemodell, umfassend das Eingabegerät, mindestens das erste Modul, welches wiederum mindestens das Submodul aufweist, und die erste und die zweite Steuerung mit deren Verschaltungsinformationen, abgespeichert ist. Die genannte Modellierung des Gerätemodells findet beispielsweise in der genannten Profinet-Norm Anwendung. Hier sind die Gerätetypen Controller und I/O-Device, wobei das I/O-Device dem Eingabegerät entspricht, spezifiziert. Das Gerätemodell für I/O-Devices besteht demnach aus den Objekten I/O-Device, Modulen und Submodulen. Die Profinet-Spezifikation sieht vor, dass ein Submodul mit Schnittstellen eindeutig einem Controller zugeordnet wird. Mit dem Parameterblock in dem Modul ist das Eingabegerät nach wie vor nach der Vorgabe der Profinet-Spezifikation mit der eindeutigen Zuordnung eines Submoduls zu einer Steuerung parametriert. Das Kopiermittel erlaubt es nun aber das Signalabbild der Prozess-Signale in unterschiedliche Speicherbereiche zu kopieren, wobei die Speicherbereiche wiederum eindeutig den Submodulen zugeordnet sind.

In einer weiteren Ausgestaltung des Automatisierungssystems weist das Modul ein Diagnosemittel für die Prozess-Signale auf und das Diagnosemittel ist ausgestaltet den Signalzustand eines Prozess-Signals zu bewerten und den Prozess-Signal einen Status zuzuordnen und in dem ersten Speicherbereich abzulegen. Diese Diagnoseinformationen werden als Zusatzinformationen neben den Signalzuständen der Prozess-Signale in den Speicherbereichen für die Steuerungen bereitgestellt. Um dies zu ermöglichen ist das Kopiermittel weiterhin dazu ausgestaltet den Status der Prozess-Signale von dem ersten Speicherbereich in den zweiten Speicherbereich zu kopieren.

In weiterer vorteilhafter Ausgestaltung weist das Eingabegerät einen Rückwandbus auf, in welchen mehrere Module steckbar sind.

Die Zeichnung zeigt ein Ausführungsbeispiel, dabei zeigt die
- FIG 1: ein Automatisierungssystem mit mehreren Steuerungen und einem Eingabegerät und die
- FIG 2: ein Eingabegerät mit mehreren Modulen.

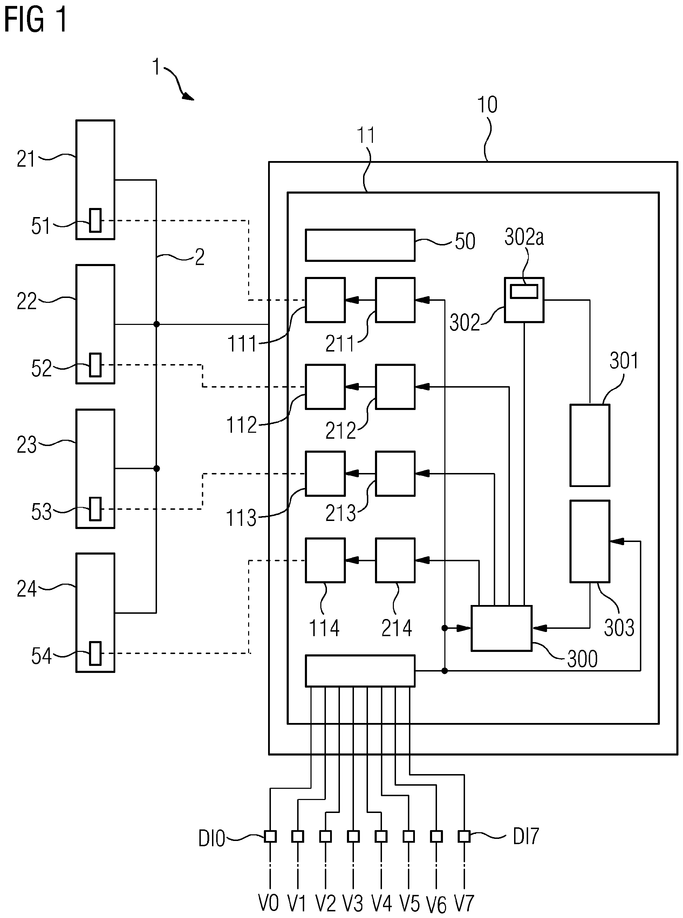

Gemäß der FIG 1 ist ein Automatisierungssystem 1 umfassend eine erste Steuerung 21, eine zweite Steuerung 22, eine dritte Steuerung 23 und eine vierte Steuerung 24, welche gemeinsam auf ein Eingabegerät 10 über einen Feldbus 2 zugreifen können, gezeigt.

Um die Zugriffe zu koordinieren weist die erste Steuerung 21 erste Verschaltungsinformationen 51 auf, wobei der Zugriff der ersten Steuerung 21 über den Feldbus 2 auf ein erstes Submodul 111 eines Moduls 11 des Eingabegerätes 10 symbolisch über eine gestrichelte Linie angezeigt ist.

Die zweite, dritte, vierte Steuerung 22,23,24 weisen ebenfalls zweite, dritte, vierte Verschaltungsinformationen 52,53,54 auf. Auch diese Zugriffswege sind symbolisch über gestrichelte Linien zu dem Eingabegerät 10 angedeutet. Demnach ist die erste Steuerung 21 dem ersten Submodul 111, die zweite Steuerung 22 einem zweiten Submodul 112, die dritte Steuerung 23 einem dritten Submodul 113 und die vierte Steuerung 24 einem vierten Submodul 114 zugeordnet.

Das Eingabegerät 10 ist mit einer Mehrzahl von Eingängen DI0,...,DI7 für Prozess-Signale verbunden.

In diesem Ausführungsbeispiel weist das Eingabegerät 10 nur ein erstes Modul 11 auf. An das Modul 11 sind über Signalleitungen Prozess-Signale aus einem zu automatisierenden Prozess an die Eingängen DI0,...,DI7 angeschlossen. Die Signalleitungen führen auf ein Mittel zur Vorhaltung eines Signalabbildes der Prozess-Signale. An das Mittel zur Vorhaltung des Signalabbildes ist über entsprechende Datenleitungen ein erster Speicherbereich 211 angeschlossen. Der erste Speicherbereich 211 steht wiederum mit dem ersten Submodul 111 in Verbindung. Die Signalzustände der Prozess-Signale werden somit über den ersten Speicherbereich 211, dem ersten Submodul 111 bereitgestellt und über die Zuordnung der ersten Steuerung 21 mit den ersten Verschaltungsinformationen 51 kann die erste Steuerung 21 über das erste Submodul 111 auf die Prozess-Signale der Eingänge DI0,..., DI7 zugreifen.

Um auch der zweiten Steuerung 22 die Prozess-Signale der Eingänge DI0,...,DI7 bereitzustellen weist das Modul 11 ein Kopiermittel 300 auf, welches ausgestaltet ist, dass Signalabbild der Prozess-Signale von dem ersten Speicherbereich 211 in einen zweiten Speicherbereich 212 zu kopieren, wobei der zweite Speicherbereich 212 dem zweiten Submodul 112 zugeordnet ist. Nun liegt eine Kopie der Prozess-Signale der Eingänge DI0,...,DI7 in dem zweiten Speicherbereich 212 bereit, der zweite Speicherbereich 212 ist dem zweiten Submodul 112 zugeordnet. Über die zweiten Verschaltungsinformationen 52 in der zweiten Steuerung 22 kann die zweite Steuerung 22 ebenfalls auf die Prozess-Signale der Eingänge DI0,...,DI7 nahezu gleichzeitig mit der ersten Steuerung 21 zugreifen. Ein aufwändiges Kopieren der Prozess-Signale über eine separate Datenleitung von der ersten Steuerung 21 zu der zweiten Steuerung 22 kann somit auf vorteilhafte Weise entfallen.

Anstelle über einen Speicherbereich die Prozesssignale umzukopieren, können diese auch parallel an die den Submodulen 111,112,113,114 zugeordneten Adressen gesendet werden.

Weiterhin ist das Modul 11 so aufgebaut, dass einem dritten Submodul 113 ein dritter Speicherbereich 213 zugeordnet ist und einem vierten Submodul 114 ein vierter Speicherbereich 214 zugeordnet ist. Das Kopiermittel 300 ist dabei dazu ausgestaltet jeweils das Prozessabbild der Prozess-Signale entweder von dem ersten Speicherbereich 211 auf die jeweiligen zweiten, dritten und vierten Speicherbereiche 212,213,214 zu kopieren oder es arbeitet als eine Art Verteiler und verteilt Kopien automatisch auf die jeweiligen Speicherbereiche.

Um von einem Standardbetrieb in einem Kopierbetrieb zu wechseln weist das Modul 11 ein Betriebsartenschaltmittel 301 auf, welches mit einem Mittel 302 aufweisend eine Steuersoftware 302a in Verbindung steht. Dabei ist die Steuersoftware 302a derart ausgestaltet, dass Betriebsartenschaltmittel 301 abzufragen und zwischen einer Steuerung des Moduls 11 in einem Standardbetrieb oder in einem Kopierbetrieb zu wechseln.

Der Standardbetrieb entspricht entsprechend der Profinet-Spezifikation, dass ein Submodul 111,112,113,114 jeweils genau einer Steuerung 21,22,23,24 zugeordnet ist. Der Kopierbetrieb ermöglicht es nun das Prozess-Signale über die Eingänge DI0,...,DI7 allen angeschlossenen Steuerungen 21,22,23,24 gleichzeitig bereitgestellt werden.

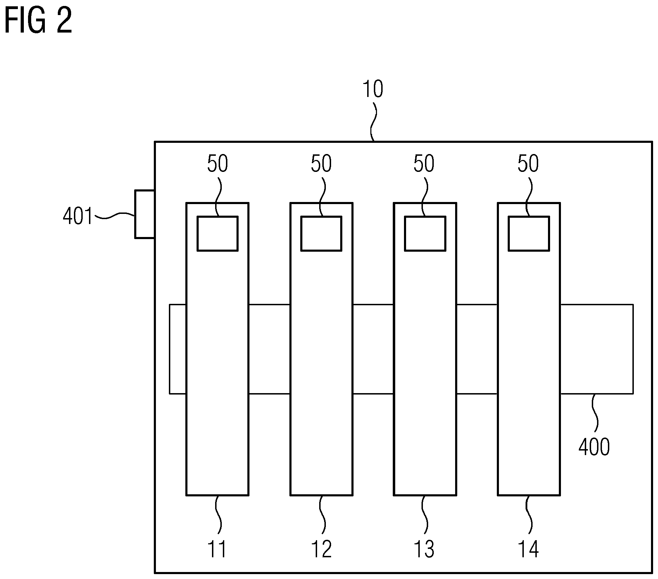

Mit der FIG 2 ist ein erweitertes Eingabegerät 10 gezeigt. Das Eingabegerät 10 ist derart erweitert, dass es über einen eingebauten Rückwandbus 400 neben dem ersten Modul 11, ein zweites Modul 12, ein drittes Modul 13 und ein viertes Modul 14 aufnehmen kann. Alle Module weisen je einen Parameterblock 50 auf, in welchem die Verschaltungsinformationen zu den unterschiedlichen Steuerungen abgespeichert sind. Der innere Aufbau der Module 11,12,13,14 entspricht dem Aufbau des ersten Moduls 11, welches in FIG 1 gezeigt wurde. Das Eingabegerät 10 verfügt über einen Feldbusanschluss 401, an welchem der Feldbus 2 angeschlossen wird.

## Patentansprüche

1. Automatisierungssystem (1) umfassend eine
- erste Steuerung (21) und
- eine zweite Steuerung (22)
welche über einen Feldbus (2) mit einem Eingabegerät (10) verbunden sind, wobei das Eingabegerät (10) ein
- Modul (11,...,14), welches wiederum
- mindestens ein erstes Submodul (111) und ein zweites Submodul (112) aufweist, umfasst,
wobei die erste Steuerung (21) erste Verschaltungsinformationen (51) aufweist, welche eine Zuordnung zwischen der ersten Steuerung (21) und dem ersten Submodul (111) festlegt, und die zweite Steuerung (22) zweite Verschaltungsinformationen (52) aufweist, welche eine Zuordnung zwischen der zweiten Steuerung (22) und dem zweiten Submodul (112) festlegt, weiterhin ist das Modul (11) ausgestaltet, dass es mit einer Mehrzahl von Eingängen (DI0,...,DI7) für Prozess-Signale verbunden ist, wobei ein Signalabbild der Prozess-Signale in einen ersten Speicherbereich (211) abgelegt ist, wobei der erste Speicherbereich (111) dem ersten Submodul (111) zugeordnet ist, **dadurch gekennzeichnet , dass** das Modul (11) ein Kopiermittel (300) aufweist, welches ausgestaltet ist das Signalabbild der Prozess-Signale von dem ersten Speicherbereich (211) in einen zweiten Speicherbereich (212) zu kopieren, wobei der zweite Speicherbereich (212) dem zweiten Submodul (112) zugeordnet ist.

2. Automatisierungssystem (1) nach Anspruch 1, wobei das Modul (11) ein Betriebsartenschaltmittel (301) aufweist, welches mit einem Mittel (302) aufweisend eine Steuersoftware (302a) des Moduls (11) in Verbindung steht, und die Steuersoftware (302a) ausgestaltet ist das Betriebsartenschaltmittel (301) abzufragen und zwischen einer Steuerung des Moduls (11) in einem Standardbetrieb oder in einem Kopierbetrieb zu wählen.

3. Automatisierungssystem (1) nach Anspruch 1 oder 2, wobei das Modul (11) einen Parameterblock (50) aufweist, in welchem ein Gerätemodell, umfassend
- das Eingabegerät (10),
- mindestens das erste Modul (11), welches wiederum
- mindestens das Submodul (111) aufweist,
und die erste und zweite Steuerung (21,22) mit deren Verschaltungsinformationen (51,52), abgespeichert ist.

4. Automatisierungssystem (1) nach einem der Ansprüche 1 bis 3, wobei das erste Modul (11) ein Diagnosemittel (303) für die Prozess-Signale aufweist und das Diagnosemittel (303) ausgestaltet ist den Signalzustand eines Prozess-Signals zu bewerten und dem Prozess-Signal einen Status zuzuordnen und in dem ersten Speicherbereich (211) abzulegen.

5. Automatisierungssystem (1) nach Anspruch 4, wobei das Kopiermittel (300) weiterhin dazu ausgestaltet ist den Status der Prozess-Signale von dem ersten Speicherbereich (21) in den zweiten Speicherbereich (212) zu kopieren.

6. Automatisierungssystem (1) nach Anspruch 3, wobei das Gerätemodell nach der Profinet-Spezifikation betrieben wird.

7. Automatisierungssystem (1) nach einem der Ansprüche 1 bis 6, wobei das Eingabegerät (10) einen Rückwandbus (400) aufweist, in welchen mehrere Module (11,12,13,14) steckbar sind.

## Claims

1. Automation system (1) comprising
- a first controller (21) and
- a second controller (22)
which are connected to an input device (10) via a field bus (2), wherein the input device (10) comprises
- a module (11,...,14) which in turn has
- at least one first sub-module (111) and a second sub-module (112),
wherein the first controller (21) has first interconnection information (51) which defines an assignment between the first controller (21) and the first sub-module (111), and
the second controller (22) has second interconnection information (52) which defines an assignment between the second controller (22) and the second sub-module (112),
the module (11) being additionally designed to be connected to a plurality of inputs (DI0,...,DI7) for process signals, wherein a process signal image is stored in a first memory area (211), wherein the first memory area (111) is assigned to the first sub-module (111), **characterised in that** the module (11) has a copying means (300) which is designed to copy the process signal image from the first memory area (211) to a second memory area (212), wherein said second memory area (212) is assigned to the second sub-module (112).

2. Automation system (1) according to claim 1, wherein the module (11) has an operating mode switching means (301) which is connected to a means (302) comprising control software (302a) of the module (11), the control software (302a) being designed to interrogate the operating mode switching means (301) and select between control of the module (11) in standard mode or in copying mode.

3. Automation system (1) according to claim 1 or 2, wherein the module (11) has a parameter block (50) in which is stored a device model comprising
- the input device (10),
- at least the first module (11), which in turn has
- at least the sub-module (111),
and the first and second controller (21,22) with their interconnection information (51,52).

4. Automation system (1) according to one of claims 1 to 3, wherein the first module (11) has a diagnostic means (303) for the process signals, and the diagnostic means (303) is designed to evaluate the signal state of a process signal and to assign the process signal a status and store it in the first memory area (211).

5. Automation system (1) according to claim 4, wherein the copying means (300) is additionally designed to copy the status of the process signals from the first memory area (21) to the second memory area (212).

6. Automation system (1) according to claim 3, wherein the device model is operated in accordance with the Profinet specification.

7. Automation system (1) according to one of claims 1 to 6, wherein the input device (10) has a backplane bus (400) into which a plurality of modules (11,12,13,14) can be inserted.

## Revendications

1. Système (1) d'automatisation, comprenant
- une première commande (21) et
- une deuxième commande (22)
qui sont reliées à un appareil (10) d'entrée, par l'intermédiaire d'un bus (2) sur site, l'appareil (10) d'entrée comprenant
- un module (11, ..., 14), qui a à son tour
- au moins un premier sous-module (111) et un deuxième sous-module (112),
dans lequel la première commande (21) a une première information (51) de câblage, qui détermine une association entre la première commande (21) et le premier sous-module (111) et la deuxième commande (22) a une deuxième information (52) de câblage, qui détermine une association entre la deuxième commande (22) et le deuxième sous-module (112),
le module (11) est conformé en outre de manière à être relié à une pluralité d'entrées (DI0, ..., DI7) de signaux de processus, une reproduction des signaux de processus étant mémorisée dans une première partie (211) de mémoire, la première partie (111) de mémoire étant affectée au premier sous-module (111), **caractérisé en ce que** le module (11) a un moyen (300) de copie, conformé pour copier la reproduction du signal de processus de la première partie (211) de mémoire dans une deuxième partie (212) de mémoire, la deuxième partie (212) de mémoire étant affectée au deuxième sous-module (112).

2. Système (1) d'automatisation suivant la revendication 1, dans lequel le module (11) a un moyen (301) de commutation de type de fonctionnement, qui est en liaison avec un moyen (302) ayant un logiciel (302a) de commande du module (11) et le logiciel (302a) de commande est conformé pour interroger le moyen (301) de commutation de type de fonctionnement et choisir entre une commande du module (11) dans un fonctionnement normal ou dans un fonctionnement de copie.

3. Système (1) d'automatisation suivant la revendication 1 ou 2, dans lequel le module (11) a un bloc (50) de paramètres, dans lequel est mémorisé un modèle d'appareil comprenant
- l'appareil (10) d'entrée,
- au moins le premier module (11), qui a à son tour
- au moins le sous-module (111),
et la première et la deuxième commande (21, 22) avec leurs informations (51, 52) de câblage.

4. Système (1) d'automatisation suivant l'une des revendications 1 à 3, dans lequel le premier module (11) a un module (303) de diagnostic pour les signaux de processus et le moyen (303) de diagnostic est conformé pour évaluer l'état d'un signal de processus et affecter au signal de processus un statut et le mémoriser dans la première partie (211) de la mémoire.

5. Système (1) d'automatisation suivant la revendication 4, dans lequel le moyen (300) de copie est conformé en outre pour copier le statut des signaux de processus de la première partie (21) de la mémoire dans la deuxième partie (212) de la mémoire.

6. Système (1) d'automatisation suivant la revendication 3, dans lequel le modèle d'appareil fonctionne suivant la spécification Profinet.

7. Système (1) d'automatisation suivant l'une des revendications 1 à 6, dans lequel l'appareil (10) d'entrée a un bus (400) de paroi arrière, dans lequel plusieurs modules (11, 12, 13, 14) peuvent être enfichés.
